# EUROPEAN PATENT SPECIFICATION

(11) **EP 2 339 761 B1**
(45) Date of publication and mention of the grant of the patent: **11.07.2012**
(21) Application number: 09306314.7
(22) Date of filing: 22.12.2009
(51) Int. Cl.: H04B 7/26, H04J 3/06, H04W 56/00

(54) **Method for synchronizing nodes**
Verfahren zur Synchronisation von Knoten
Procédé de synchronisation de noeuds

(43) Date of publication of application: 29.06.2011
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Gresset, Nicolas, 35830 Betton (FR)
(74) Representative: Blot, Philippe Robert Emile

(56) References cited:
- WO-A1-01/15340
- AKAIWA Y ET AL: "Autonomous decentralized inter-base-station synchronization for TDMA microcellular systems" 1991 IEEE 41TH. VEHICULAR TECHNOLOGY CONFERENCE. ST. LOUIS, MAY 19 - 22, 1991; [IEEE VEHICULAR TECHNOLOGY CONFERENCE], NEW YORK, IEEE, US LNKD- DOI:10.1109/VETEC.1991.140489, vol. CONF. 41, 19 May 1991 (1991-05-19), pages 257-262, XP010037089 ISBN: 978-0-87942-582-1

## Description

The present invention relates to a method for synchronizing at least two nodes in communication with at least one terminal in a wireless network and to a device for implementing such a method.

The invention relates more particularly to the synchronization of home base stations (HeNBs). Such home base stations are deployed, for example, for providing a seamless wireless network inside houses or in a building of a company, a mall, a station or more generally any large building. Thus, in such a network, the number of HeNBs is large.

According to the 3GPP-LTE ("3^{rd} Generation Partnership Project Long Term Evolution") standard, in a typical deployment of HeNBs, the nodes of the wireless network are activated in an uncoordinated way and non-synchronized one from each other.

However, it would be advantageous to synchronize such home base stations.

The first advantage of this synchronization is an improvement of the overall performance of the wireless network.

For example, a terminal in the network will perceive the synchronization signals of the different HeNBs as perfectly orthogonal which improves, for example, the detection algorithms used for mobility purposes.

A second advantage of this synchronization is the possibility of providing new telecommunication services such as multimedia broadcasting inside the building wherein the seamless wireless network is deployed.

The third advantage of this synchronization is the possibility of providing other services such as an accurate geolocation of the terminals.

There exists several means for providing nodes synchronization, over a fixed network, but limited in most cases to low accuracy (around a millisecond in practical scenarios with several nodes), and insufficient for taking benefit from it.

These algorithms depend a lot on the topology of the fixed network, and thus cannot be used with high reliability requirements.

For wireless networks, a target of around microsecond must be achieved. Several algorithms for distributed synchronization of nodes on a wireless network exist, most of them being developed for ad-hoc sensor networks. The known algorithms are based on correction of the synchronization time of each node from observation of neighboring nodes.

The existing algorithms for distributed synchronization of nodes most of the times apply an on-the-fly correction of the time of synchronization. Indeed, in most applications, the synchronization is an initial phase before communication between the nodes, and the synchronization is a necessary condition before any transmission.

However, in the context of the HeNBs, the node i.e. the HeNB itself is not in wireless communication i.e. there is no data exchange with other nodes (HeNBs).

However, the HeNB is in communication with several terminals. Thus, the synchronization between nodes is not a necessary condition but is a way for improving the overall system performance.

As several mobiles are in communication via the HeNB and synchronized to it, it is not possible to modify the synchronization time of the HeNB as it would cause the terminals to loose their synchronization with it, thus drastically degrading or cutting the communication.

The invention accordingly gives a solution to the above problem by proposing a synchronization method that does not disturb the communication between the nodes and the terminals.

The document WO-A-01/15340 discloses methods of synchronizing base stations.

The invention relates to a method for synchronizing at least two nodes in communication with at least one terminal in a wireless network, each node transmitting synchronization sub-frames, each synchronization sub-frame of a node being aligned to an actual synchronization time dedicated to said node, characterized in that it comprises
a preliminary step of defining, for each node a virtual synchronization time, and in that the method further comprises the steps, carried for each node, of:
- determining the virtual synchronization time of the at least another node;
- computing an update of the virtual synchronization time of said node using the virtual synchronization time of the at least another node when terminals are connected to said node; and
- changing the actual synchronization time of said node according to its updated virtual synchronization time.

According to particular embodiments, the method for synchronizing at least two nodes comprises one or more of the following characteristics:
- the step of changing the actual synchronization time of said node is processed only if no terminal is connected to said node,
- the step of changing the actual synchronization time of said node is processed slowly so that a terminal in communication with said node can follow the time drift between the actual synchronization time and the virtual synchronization time and keep a connection to said node,
- the step of computing an update of the virtual synchronization time of said node uses a distributed synchronization algorithm,
- the nodes are home base stations,
- the synchronization sub-frame is a blank sub-frame,
- the synchronization sub-frame is a MBSFN sub-frame,
- the step, carried for each node, of determining the virtual synchronization time of the at least another node is carried by the terminal by measurements,
- it comprises the step, carried for each node, of transmitting a message, from the terminal to said node, containing the determined virtual synchronization time of the at least another node,
- the step, for each node, of determining the virtual synchronization time of the at least another node is carried by said node,
- the transmission of the synchronization sub-frames is OFDM-based,
- each synchronization sub-frame carries a synchronization signal, the synchronization signals of the at least two nodes having good cross-correlations, and
- the synchronization signals of the at least two nodes are the same.

The invention also relates to a device for synchronizing at least two nodes in communication with at least one terminal in a wireless network, each node transmitting synchronization sub-frames, each synchronization sub-frame of a node being aligned to an actual synchronization time dedicated to said node, characterized in that it comprises means for defining a virtual synchronization time for each node and means, provided at each node, for :
- determining the virtual synchronization time of the at least another node;
- computing an update of the virtual synchronization time of said node using the virtual synchronization time of the at least another node when terminals are connected to said node;
- changing the actual synchronization time of said node according to its updated virtual synchronization time.

A better understanding of the invention will be facilitated by reading the following description, which is given solely by way of examples and with reference to drawings, in which:
- Figure 1 is an architectural view of a seamless network wherein is implemented the method for synchronizing nodes according to the invention;
- Figure 2 is a view illustrating three nodes and three synchronization sub-frames used for implementing the method for synchronizing nodes according to the invention;
- Figure 3 is a flow chart illustrating the steps of the method for synchronizing nodes according to the invention;
- Figure 4 is a view illustrating the behavior of the method for synchronizing nodes according to the invention;
- Figure 5 is a view illustrating, step by step, the behavior of the method for synchronizing nodes according to the invention, and
- Figure 6 is a view illustrating the synchronization signals used for implementing the method for synchronizing nodes according to the invention.

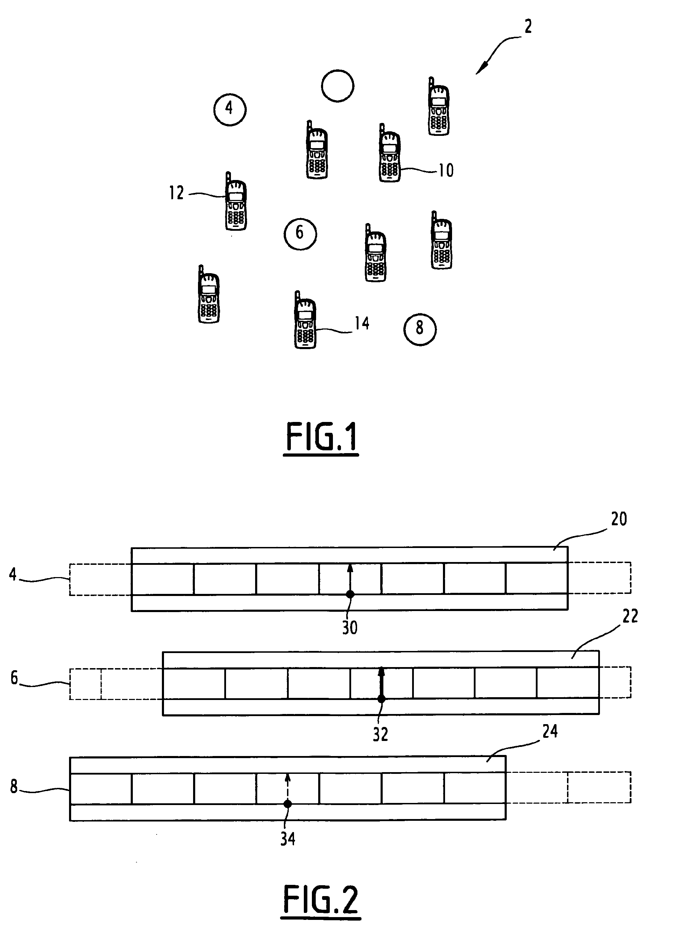

Figure 1 illustrates a seamless wireless network 2 comprising nodes 4, 6, 8, consisting for example in home base stations (HeNBs), connected to several terminals 10, 12, 14 ...

The principle of the present invention consists on computing the classical (for example distributed) synchronization algorithm on a virtual synchronization time and updating the actual synchronization time of the node according to its virtual synchronization time .

The implementation of the method for synchronizing nodes 4, 6, 8 is explained with more details in the following description with reference to figures 2 to 6.

The nodes 4, 6, 8 transmit symbols which are grouped into sub-frames.

According to a particular embodiment of the present invention, the transmission is OFDM ("Orthogonal Frequency Division Multiplexing") based.

The nodes 4, 6, 8 transmit data sub-frames as well as sub-frames dedicated for synchronization. These dedicated sub-frames may be for example, a blank sub-frame or a MBSFN ("Multicast Broadcast over Single Frequency Network") sub-frame of the 3GPP-LTE standard.

Figure 2 represents synchronization sub-frames 20, 22 and 24 of nodes 4, 6 and 8 respectively.

According to the invention, each synchronization sub-frame 20, 22, 24 contains a signal that can be spread over the multiple symbols of the sub-frame such that a predetermined processing allows for locating a given point of the sub-frame, for example the middle of the sub-frame, as illustrated by arrows in the Figure 2.

This point is called the virtual synchronization time or VST of the node in the following description.

Thus, as illustrated, in Figure 2, nodes 4, 6 and 8 have the respective VSTs 30, 32 and 34.

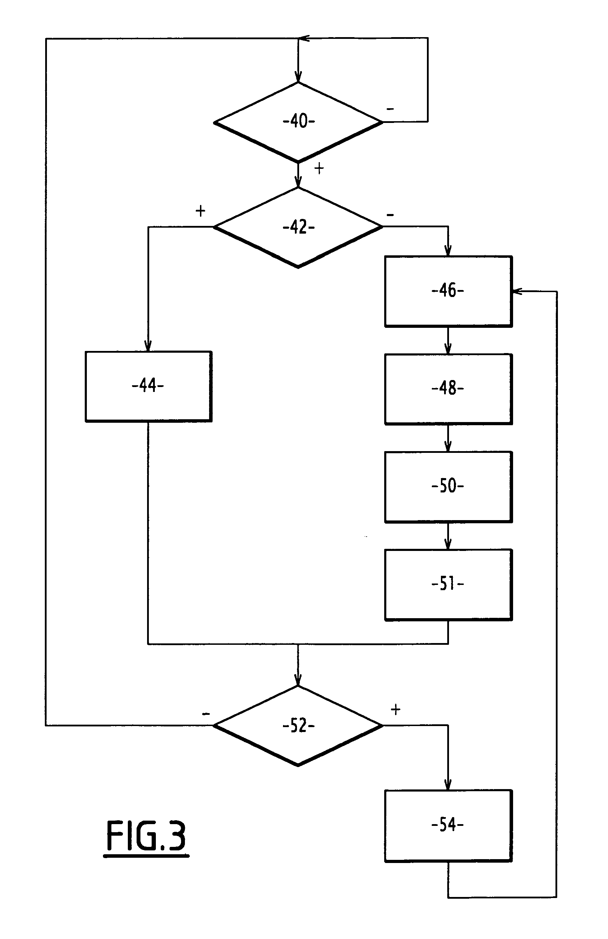

Figure 3 illustrates the steps of the synchronization method between nodes according to the invention.

In the following, it is assumed that at a given time, some nodes are transmitting the synchronization sub-frames while other nodes switch into a receiving mode.

The synchronization method of the invention is described for node 4 but the same processing is carried for the other nodes 6 and 8.

In 40, the node 4 checks if its current transmitted sub-frame is a sub-frame containing signals for nodes synchronization, i.e. a synchronization sub-frame. If the result of the checking is negative, i.e. the sub-frame is not a synchronization sub-frame, the node 4 processes the data transmission to the connected terminal. Else, the node 4 checks in 42 if it must be in transmission or reception mode for synchronization between nodes.

This information can be given by a coordinator (for example, a gateway connected to several nodes) or by a scheduling of a known synchronization algorithm.

If the node 4 is in transmission mode for the synchronization between nodes, it transmits in 44 a signal aligned to its virtual synchronization time or VST.

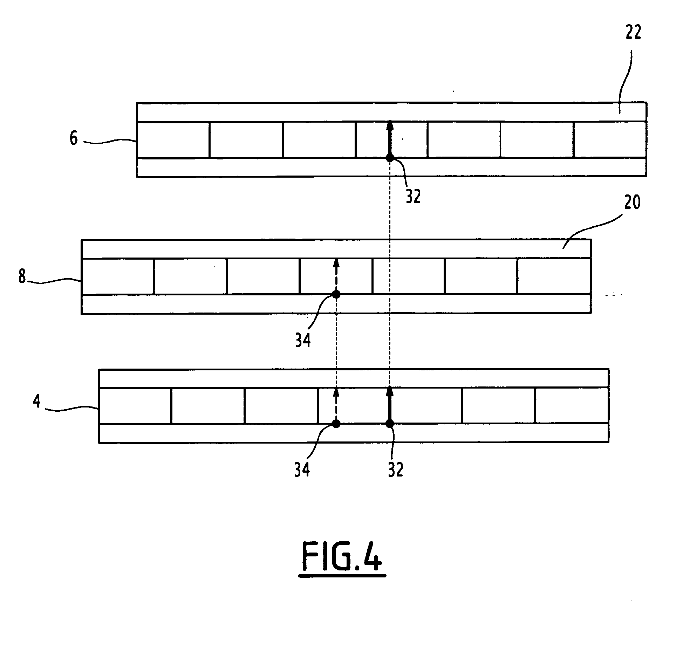

If the node 4 is in the reception mode for the synchronization between nodes, it listens in 46 the signals sent in the time period corresponding to a sub-frame, aligned to its actual synchronization time (which is for example the middle time of the synchronization sub-frame) and determines the VST of other nodes 6, 8 from the received signals. This step 46 is illustrated in Figure 4.

As illustrated in Figure 4, node 4 is in a reception mode wherein it listens during a blank sub-frame.

Node 4 detects the VST 32 and 34 of nodes 6 and 8 respectively.

These VSTs are not in the same position in the sub-frame as the nodes are not synchronized one with the others.

Measuring the virtual synchronization time of neighboring nodes is done either by the node itself using the synchronization sub-frames or by the terminals of the node, and provided to the node by measurements reports containing messages comprising the determined VSTs of the other nodes.

In 48, the node 4 applies a classical synchronization algorithm, for example a distributed synchronization algorithm known in ad-hoc networks, that computes in 50 an update of its virtual synchronization time as a function of the observed VSTs of the other nodes 6, 8. However, even if this VST is updated, the node 4 desynchronization with the neighboring nodes 6, 8 remains the same.

According to a particular embodiment of the invention, in 51, the node 4 modifies slowly its AST to be equal to its VST. The modification must be slow enough to allow a terminal in communication with the node 4 to be able to track this slow time synchronization drifting, and to keep a good communication quality. For example, the slow drifting might be processed by removing or adding one sample in the discrete version of the time domain OFDM signal. This allows for updating the AST of the node 4 while it is in communication with a terminal, and thus makes the system converge more quickly. This slow modification of the AST can be done by the node in parallel with other tasks such as transmitting or receiving data to/from the mobile terminals.

Then, in 52, the node 4 checks if it switches to the idle mode, i.e. it checks if there are active terminal connected to it or no. If node 4 is not in the idle node, the processing comes back to step 40.

As soon as the node 4 falls into an idle node, it updates in 54 its actual synchronizing time AST to its virtual synchronization time VST.

In the particular embodiment wherein a slow correction in 51 is performed, steps 52 and 54 are only optional.

This means that when the node 4 will start again a communication, the next sub-frames will be aligned to the VST determined in 50. The node 4 will be more synchronized to its neighboring nodes 6, 8 thus the nodes converge to a synchronized state and the performance of the network is improved.

Then, the processing comes back to step 46 so that the node synchronization goes on being improved while the node 4 is in idle mode.

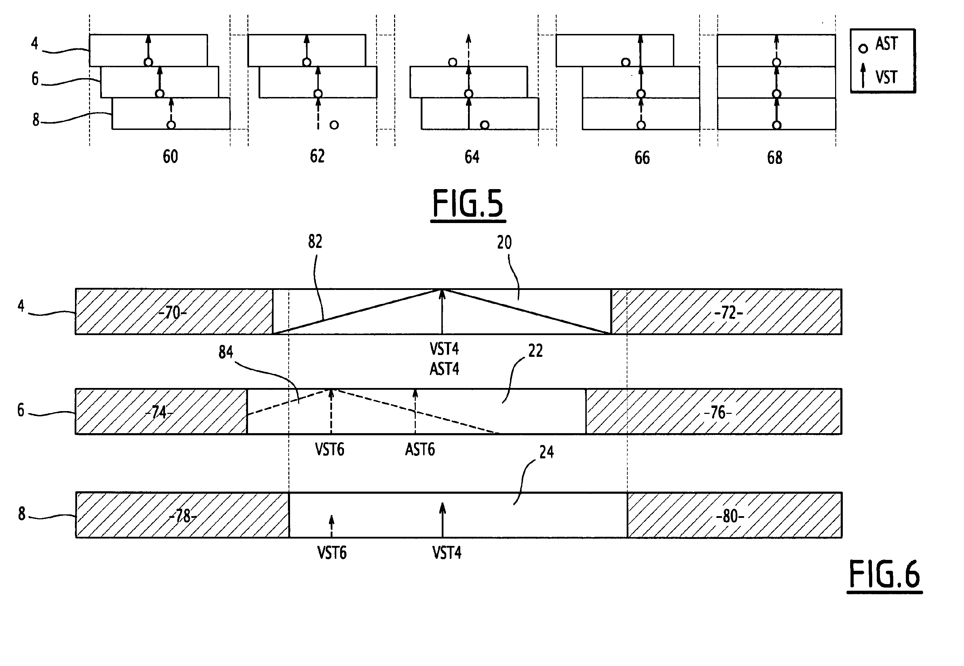

Figure 5 illustrates, step by step, an embodiment of the method for synchronizing nodes, according to the invention. In Figure 5, only the synchronization sub-frames of nodes 4, 6 and 8 are illustrated.

In 60, the three nodes 4, 6 and 8 are not synchronized. Their virtual synchronization times VSTs are drawn by arrows and their actual synchronization time ASTs are draws by circles in Figure 5.

In 62, the node 8 listens and computes from the virtual synchronization times of nodes 4 and 6 an updated VST, shown as a dotted line arrow.

In 64, the node 8 transmits a synchronization sub-frame with a signal making its VST appear to the updated value (different from its actual synchronization time). The node 4 listens and computes from the VSTs of nodes 6 and 8 an updated VST shown as a dotted line arrow.

In 66, the node 4 transmits, a synchronization sub-frame with a signal making its virtual synchronization time appear to the updated value.

It is assumed that the node 8 felt in an idle mode between 64 and 66 and updated its actual synchronization time value to be equal to its virtual synchronization time.

In 68, it is assumed that the node 4 felt in an idle mode between 66 and 68 and updates its actual synchronization time value to be equal to its virtual synchronization time.

Thus, at the end of 68, the three nodes 4, 6 and 8 are synchronous.

Figure 6 is a view illustrating the synchronization signals used for implementing the method for synchronizing modes according to the invention.

Figure 6 illustrates sub-frames of nodes 4, 6 and 8.

Sub-frames 70, 72, 74, 76, 78 and 80 are normal sub-frames used for transmitting data.

The node 4 transmits a synchronization signal 82 (illustrated by a triangle) such that its virtual synchronization time VST4 is equal to its actual synchronization time AST4.

Thus, the synchronization signal is not truncated in synchronization sub-frame 20 of node 4.

For node 6, the virtual synchronization time VST6 is not equal to the actual synchronization AST6. In order to align the synchronization signal, referenced 84, of node 6 to the actual synchronization time AST6, this synchronization signal 84 is shifted by a value VST6-AST6 so the synchronization signal 84 is truncated.

The node 8 is assumed to be listening during the synchronization sub-frame 24. Node 8 thus makes a correlation with the synchronization signal 82 of node 4 and with the synchronization signal 84 of node 6.

For simplicity the propagation delay between nodes is regulated so that node 8 can determine VST4 and VST6.

It is worthy to observe that the peaks of the correlations vary as a function of the mis-synchronization of nodes and as a function of the virtual synchronization times as illustrated by amplitude of the arrows in Figure 6.

Concerning the choice of the synchronization signals transmitted within the synchronization sub-frames of the nodes, there are two possible embodiments.

According to the first embodiment, all the nodes use the same synchronization signal. In this case, a listening node can perform an autocorrelation, or a cross-correlation of the received signal and the synchronization signal, and detect the VST at the output of the auto/cross-correlation.

According to the second embodiment, all the nodes have a synchronization signal chosen from a set of signals having good cross-correlations such as Zadoff-chu sequences or Hadamard sequences. The listening node thus computes multiple cross correlations, one with each signal of the set, and can discriminate the VST of each neighbor. This is particularly useful if the synchronization algorithm needs to perfectly know the number of neighboring nodes and their respective VSTs.

Thus, the method of the invention aims at synchronizing the nodes 4, 6, 8 without disturbing the communication between the terminals 10, 12, 14.

An idea to reach this purpose is to take benefit from the idle periods during which no terminal is active to change the synchronization times of the nodes 4, 6, 8.

Unfortunately, by only considering idle time periods of the nodes for synchronization time update, the number of exchanges between the nodes which must be idle at the same time, and thus the convergence speed of the system is limited.

The invention gives a solution that allows for processing existing synchronization algorithms for updating the synchronization time of a given node, while active terminals are in communication with said node.

In some cases, a node can obtain a precise actual synchronisation time (AST) from another way of synchronization than using the above described algorithm of the invention. For example, said node is equipped with a GPS receiver or connected to an optical network providing a way of synchronization to the node.

Thus, as this node obtains its AST from the other way of synchronization, it aligns its VST to its AST and remains in a transmission mode of synchronization sub-frames as described in step 44 of the invention's algorithm. Thus, such a node gives an improved robustness to the overall system performance.

## Claims

1. Method for synchronizing at least two nodes (4, 6, 8) in communication with at least one terminal (10, 12, 14) in a wireless network (2), each node (4, 6, 8) transmitting synchronization sub-frames (20, 22, 24), each synchronization sub-frame (20, 22, 24) of a node being aligned to an actual synchronization time dedicated to said node, **characterized in that** it comprises
a preliminary step of defining, for each node (4, 6, 8) a virtual synchronization time, and **in that** the method further comprises the steps, carried for each node (4, 6, 8), of:
- determining (46) the virtual synchronization time of the at least another node;
- computing (50) an update of the virtual synchronization time of said node using the virtual synchronization time of the at least another node when terminals are connected to said node; and
- changing the actual synchronization time of said node according to its updated virtual synchronization time.

2. Method for synchronizing at least two nodes (4, 6, 8) according to claim 1, **characterized in that** the step of changing (54) the actual synchronization time of said node is processed only if no terminal is connected to said node.

3. Method for synchronizing at least two nodes (4, 6, 8) according to claim 1, **characterized in that** the step of changing the actual synchronization time of said node is processed slowly so that a terminal in communication with said node can follow the time drift between the actual synchronization time and the virtual synchronization time and keep a connection to said node.

4. Method for synchronizing at least two nodes (4, 6, 8) according to anyone of claims 1 to 3, **characterized in that** the step of computing an update of the virtual synchronization time of said node uses a distributed synchronization algorithm.

5. Method for synchronizing at least two nodes (4, 6, 8) according to anyone of claims 1 to 4, **characterized in that** the nodes (4, 6, 8) are home base stations.

6. Method for synchronizing at least two nodes (4, 6, 8) according to claim 5, **characterized in that** the synchronization sub-frame (20, 22, 24) is a blank sub-frame.

7. Method for synchronizing at least two nodes (4, 6, 8) according to claim 5, **characterized in that** the synchronization sub-frame (20, 22, 24) is a MBSFN sub-frame.

8. Method for synchronizing at least two nodes (4, 6, 8) according to any one of claims 1 to 7, **characterized in that** the step, carried for each node (4, 6, 8), of determining the virtual synchronization time of the at least another node is carried by the terminal (10, 12, 14) by measurements.

9. Method for synchronizing at least two nodes (4, 6, 8) according to claim 8, **characterized in that** it comprises the step, carried for each node (4, 6, 8), of transmitting a message, from the terminal (10, 12, 14) to said node (4, 6, 8), containing the determined virtual synchronization time of the at least another node.

10. Method for synchronizing at least two nodes (4, 6, 8) according to any one of claims 1 to 7, **characterized in that** the step, for each node (4, 6, 8), of determining the virtual synchronization time of the at least another node is carried by said node (4, 6, 8).

11. Method for synchronizing at least two nodes according to any one of claims 1 to 10, **characterized in that** the transmission of the synchronization sub-frames (20, 22, 24) is OFDM-based.

12. Method for synchronizing at least two nodes (4, 6, 8) according to any one of claims 1 to 11, **characterized in that** each synchronization sub-frame (20, 22, 24) carries a synchronization signal (82, 84), the synchronization signals (82, 84) of the at least two nodes having good cross-correlations.

13. Method for synchronizing at least two nodes (4, 6, 8) according to claim 12 **characterized in that** the synchronization signals (82, 84) of the at least two nodes (4, 6, 8) are the same.

14. Device for synchronizing at least two nodes (4, 6, 8) in communication with at least one terminal (10, 12, 14) in a wireless network (2), each node (4, 6, 8) transmitting synchronization sub-frames (20, 22, 24), each synchronization sub-frame (20, 22, 24) of a node being aligned to an actual synchronization time dedicated to said node, **characterized in that** it comprises means for defining a virtual synchronization time for each node (4, 6, 8) and means, provided at each node (4, 6, 8), for :
- determining the virtual synchronization time of the at least another node;
- computing an update of the virtual synchronization time of said node using the virtual synchronization time of the at least another node when terminals are connected to said node;
- changing the actual synchronization time of said node according to its updated virtual synchronization time.

## Patentansprüche

1. Verfahren zur Synchronisation von zumindest zwei Knoten (4, 6, 8), die mit einem Endgerät (10, 12, 14) in einem Drahtlasnetzwerk (2) in Kommunikation stehen, wobei jeder Knoten (4, 6, 8) Synchronisationssubframes (20, 22, 24) sendet, wobei jeder Synchronisationssubframe (20, 22, 24) eines Knotens mit einer dem Knoten zugeordneten tatsächlichen Synchronisationszeit abgeglichen ist, **dadurch** gekenntzeichnet, dass es umfasst:
einen einleitenden Schritt des Definierens, für jeden Knoten (4, 6, 8), einer virtuellen Syrchronisationszeit,
und **dadurch**, dass das Verfahren ferner die folgenden Schritte umfasst, die für jeden Knoten (4, 6, 8) ausgeführt werden;
- Bestimmen (46) der virtuellen Synchronisationszeit des zumindest einen weiteren Knotens;
- Berechnen (50) einer Aktualisierung der virtuellen Synchronisationszeit des Knotens unter Verwendung der virtuellen Synchronisationszeit des zumindest einen weiteren Knotens, wenn Endgeräte mit dem Knoten verbunden sind; und
- Ändern der tatsächlichen Synchronisationszeit des Knotens in Übereinstimmung mit seiner aktualisierten virtuellen Synchronisationszeit.

2. Verfahren zur Synchronisation von zumindest zwei Knoten (4, 6, 8) nach Anspruch 1, **dadurch gekennzeichnet, dass** der Schritt des Änderns (54) der tatsächlichen Synchronisationszeit des Knotens nur dann bearbeitet wird, wenn kein Endgerät mit dem Knoten verbunden ist.

3. Verfahren zur Synchronisation von zumindest zwei Knoten (4, 6, 8) nach Anspruch 1, **dadurch gekennzeichnet, dass** der Schritt des Änderns der tatsächlichen Synchronisationszeit des Knotens langsam bearbeitet wird, so dass ein mit dem Knoten in Kommunikation stehendes Endgerät der Zeitabweichung zwischen der tatsächlichen Synchronisationszeit und der virtuellen Synchronisationszeit folgen kann und eine Verbindung mit dem Knoten aufrechterhalten kann.

4. Verfahren zur Synchronisation von zumindest zwei Knoten (4, 6, 8) nach einem der Ansprüche 1 bis 3, **dadurch gekennzeichnet, dass** der Schritt des Berechnens einer Aktualisierung der virtuellen Synchronisationszeit des Knotens einen verteilten Synchronisationsalgorithmus verwendet.

5. Verfahren zur Synchronisation von zumindest zwei Knoten (4, 6, 8) nach einem der Ansprüche 1 bis 4, **dadurch gekennzeichnet, dass** die Knoten (4, 6, 8) Heimbasisstationen sind.

6. Verfahren zur Synchronisation von zumindest zwei Knoten (4, 6, 8) nach Anspruch 5, **dadurch gekennzeichnet, dass** der Synchronisationssubframe (20, 22, 24) ein leerer Subframe ist.

7. Verfahren zur Synchronisation von zumindest zwei Knoten (4, 6, 8) nach Anspruch 5, **dadurch gekennzeichnet, dass** der Synchronisationssubframe (20, 22, 24) ein MBSFN-Subframe ist.

8. Verfahren zur Synchronisation von zumindest zwei Knoten (4, 6, 8) nach einem der Ansprüche 1 bis 7, **dadurch gekennzeichnet, dass** der für jeden Knoten (4, 6, 8) ausgeführte Schritt des Bestimmens der virtuellen Synchronisationszeit des zumindest einen anderen Knotens durch das Endgerät (10, 12, 14) mittel Messungen ausgeführt wird.

9. Verfahren zur Synchronisation von zumindest zwei Knoten (4, 6, 8) nach Anspruch 8, **dadurch gekennzeichnet, dass** es den für jeden Knoten (4, 6, 8) ausgeführten Schritt des Senden einer Nachricht vom Endgerät (10, 12, 14) zum Knoten (4, 6, 8) enthält, die die bestimmte virtuellen Synchronisationszeit des zumindest einen anderen Knofens enthält,

10. Verfahren zur Synchronisation von zumindest zwei Knoten (4, 6, 8) nach einem der Ansprüche 1 bis 7, **dadurch gekennzeichnet, dass** der Schritt für jeden Knoten (4, 6, 8) des Bestimmens der virtuellen Synchrohisationszeit des zumindest einen anderen Knotens durch den Knoten (4, 6, 8) ausgeführt wird.

11. Verfahren zur Synchronisation von zumindest zwei Knoten nach einem der Ansprüche 1 bis 10, **dadurch gekennzeichnet, dass** das Senden der Synchronisationssubframes (20, 22, 24) auf OFDM basiert.

12. Verfahren zur Synchronisation von zumindest zwei Knoten (4, 6, 8) nach einem der Ansprüche 1 bis 11, **dadurch gekennzeichnet, dass** jeder Synchronisationssubframe (20, 22, 24) ein Synchronisationssignal (82, 84) trägt, wobei die Synchronisationssignale (82, 84) der zumindest zwei Knoten gute Kreuzkorrelationen aufweisen.

13. Verfahren zur Synchronisation von zumindest zwei Knoten (4, 6, 8) nach Anspruch 12, **dadurch gekennzeichnet, dass** die Synchronisationssignale (82, 84) der zumindest zwei Knoten (4, 6, 8) gleich sind.

14. Vorrichtung zur Synchronisation von zumindest zwei Knoten (4, 6, 8), die mit einem Endgerät (10, 12, 14) in einem Drahtlosnetzwerk (2) in Kommunikation stehen, wobei jeder Knoten (4, 6, 8) Synchronisotionssubframes (20, 22, 24) sendet, wobei jeder Synchronisationssubframe (20, 22, 24) eines Knotens mit einer dem Knoten zugeordneten tatsächlichen Synchronisationszeit abgeglichen ist, **dadurch gekennzeichnet, dass** es Mittel zum Definieren einer virtuellen Synchronisationszeit für jeden Knoten (4, 6, 8) und Mittel umfasst, die an jedem Knoten (4, 6, 8) vorgesehen sind, zum:
- Bestimmen der virtuellen Synchronisationszeit des zumindest einen weiteren Knotens;
- Berechnen einer Aktualisierung der virtuellen Synchronisationszeit des Knotens unter Verwendung der virtuellen Synchronisationszeit des zumindest einen weiteren Knotens, wenn Endgeräte mit dem Knoten verbunden sind;
- Ändern der tatsächlichen Synchronisationszeit des Knotens in Übereinstimmung mit seiner aktualisierten virtuellen Synchronisationszeit.

## Revendications

1. Procédé de synchronisation d'au moins deux noeuds (4, 6, 8) en communication avec au moins un terminal (10, 12, 14) dans un réseau sans fil (2), chaque noeud (4, 6, 8) transmettant des sous-trames de synchronisation (20, 22, 24), chaque sous-trame de synchronisation (20, 22, 24) d'un noeud étant alignée à un temps de synchronisation réelle réservé au dit noeud, **caractérisé en ce qu'**il comprend :
une étape préliminaire de définition, pour chaque noeud (4, 6, 8), d'un temps de synchronisation virtuelle, et **en ce que** le procédé comprend en outre les étapes, effectuées pour chaque noeud (4, 6, 8), de :
- la détermination (46) du temps de synchronisation virtuelle de l'au moins un autre noeud ;
- le calcul (50) d'une mise à jour du temps de synchronisation virtuelle dudit noeud en utilisant le temps de synchronisation virtuelle de l'au moins un autre noeud lorsque des terminaux sont connectés au dit noeud ; et
- le changement du temps de synchronisation réelle dudit noeud en fonction de son temps de synchronisation virtuelle mis à jour.

2. Procédé de synchronisation d'au moins deux noeuds (4, 6, 8) selon la revendication 1, **caractérisé en ce que** l'étape de changement (54) du temps de synchronisation réelle dudit noeud est traitée uniquement si aucun terminal n'est connecté au dit noeud.

3. Procédé de synchronisation d'au moins deux noeuds (4, 6, 8) selon la revendication 1, **caractérisé en ce que** l'étape de changement du temps de synchronisation réelle dudit noeud est traitée lentement de sorte qu'un terminal en communication avec ledit noeud puisse suivre la dérive de temps entre le temps de synchronisation réelle et le temps de synchronisation virtuelle et maintenir une connexion au dit noeud.

4. Procédé de synchronisation d'au moins deux noeuds (4, 6, 8) selon l'une quelconque des revendications 1 à 3, **caractérisé en ce que** l'étape de calcul d'une mise à jour du temps de synchronisation virtuelle dudit noeud utilise un algorithme de synchronisation distribuée.

5. Procédé de synchronisation d'au moins deux noeuds (4, 6, 8) selon l'une quelconque des revendications 1 à 4, **caractérisé en ce que** les noeuds (4, 6, 8) sont des stations de base locales.

6. Procédé de synchronisation d'au moins deux noeuds (4, 6, 8) selon la revendication 5, **caractérisé en ce que** la sous-trame de synchronisation (20, 22, 24) est une sous-trame vierge.

7. Procédé de synchronisation d'au moins deux noeuds (4, 6, 8) selon la revendication 5, **caractérisé en ce que** la sous-trame de synchronisation (20, 22, 24) est une sous-trame MBSFN.

8. Procédé de synchronisation d'au moins deux noeuds (4, 6, 8) selon l'une quelconque des revendications 1 à 7, **caractérisé en ce que** l'étape, effectuée pour chaque noeud (4, 6, 8), de détermination du temps de synchronisation virtuelle de l'au moins un autre noeud est effectuée par le terminal (10, 12, 14) par des mesures.

9. Procédé de synchronisation d'au moins deux noeuds (4, 6, 8) selon la revendication 8, **caractérisé en ce qu'**il comprend l'étape, effectuée pour chaque noeud (4, 6, 8), de transmission d'un message, du terminal (10, 12, 14) au dit noeud (4, 6, 8), contenant le temps de synchronisation virtuelle déterminé de l'au moins un autre noeud.

10. Procédé de synchronisation d'au moins deux noeuds (4, 6, 8) selon l'une quelconque des revendications 1 à 7, **caractérisé en ce que** l'étape, pour chaque noeud (4, 6, 8), de détermination du temps de synchronisation virtuelle de l'au moins un autre noeud est effectuée par ledit noeud (4, 6, 8).

11. Procédé de synchronisation d'au moins deux noeuds selon l'une quelconque des revendications 1 à 10, **caractérisé en ce que** la transmission des sous-trames de synchronisation (20, 22, 24) est basée sur OFDM.

12. Procédé de synchronisation d'au moins deux noeuds (4, 6, 8) selon l'une quelconque des revendications 1 à 11, **caractérisé en ce que** chaque sous-trame de synchronisation (20, 22, 24) porte un signal de synchronisation (82, 84), les signaux de synchronisation (82, 84) des au moins deux noeuds ayant de bonnes corrélations croisées.

13. Procédé de synchronisation d'au moins deux noeuds (4, 6, 8) selon la revendication 12, **caractérisé en ce que** les signaux de synchronisation (82, 84) des au moins deux noeuds (4, 6, 8) sont les mêmes.

14. Dispositif de synchronisation d'au moins deux noeuds (4, 6, 8) en communication avec au moins un terminal (10, 12, 14) dans un réseau sans fil (2), chaque noeud (4, 6, 8) transmettant des sous-trames de synchronisation (20, 22, 24), chaque sous-trame de synchronisation (20, 22, 24) d'un noeud étant alignée à un temps de synchronisation réelle réservé au dit noeud, **caractérisé en ce qu'**il comprend un moyen pour effectuer la définition d'un temps de synchronisation virtuelle pour chaque noeud (4, 6, 8), et des moyens, fournis à chaque noeud (4, 6, 8), pour effectuer :
- la détermination du temps de synchronisation virtuelle de l'au moins un autre noeud ;
- le calcul d'une mise à jour du temps de synchronisation virtuelle dudit noeud en utilisant le temps de synchronisation virtuelle de l'au moins un autre noeud lorsque des terminaux sont connectés au dit noeud ;
- le changement du temps de synchronisation réelle dudit noeud en fonction de son temps de synchronisation virtuelle mis à jour.
